Europäisches Patentamt

European Patent Office

Office européen des brevets

(19)

(11) Veröffentlichungsnummer: **0 158 897**
**A2**

(12) **EUROPÄISCHE PATENTANMELDUNG**

(21) Anmeldenummer: **85103784.6**

(22) Anmeldetag: **29.03.85**

(51) Int. Cl.⁴: **H 02 K 17/34**

(30) Priorität: **04.04.84 DE 3412598**
**04.08.84 DE 3428888**

(43) Veröffentlichungstag der Anmeldung:
**23.10.85 Patentblatt 85/43**

(84) Benannte Vertragsstaaten:
**CH DE FR GB IT LI SE**

(71) Anmelder: **ELEKTRA-FAURNDAU**
**ELEKTRO-MASCHINENBAU GMBH**
**Goethestrasse 25**
**D-7320 Göppingen(DE)**

(72) Erfinder: **Läuger, Alfred, Dipl.-Ing.**
**Steigstrasse 9**
**D-7312 Kirchheim/Teck(DE)**

(72) Erfinder: **Haug, Helmut, Dipl.-Ing.**
**Anna-Schieber-Weg 25**
**D-7300 Esslingen/Neckar(DE)**

(74) Vertreter: **Patentanwälte Phys. Bartels Dipl.-Ing. Fink**
**Dr.-Ing. Held**
**Lange Strasse 51**
**D-7000 Stuttgart 1(DE)**

(54) **Drehfelderregte Stromrichtermaschine.**

(57) Bei einer drehfelderregten Stromrichtermaschine mit in einem Maschinengehäuse (1) angeordnetem Statorblechpaket (3, 4) für die Statorwicklung (5, 6) und auf der Rotorwelle (7) angeordnetem Rotorbleckpaket (8, 9) für die Rotorwicklung (10, 11), die beim Betrieb ein Drehfeld erzeugt, sind das Statorblechpaket (3, 4) und das Rotorblechpaket (8, 9) und damit die zugehörigen Wicklungen (5, 6 bzw. 10, 11) in einen ersten und einen zweiten Teil (4 bzw. 3, 9 bzw. 8 und 6 bzw. 5 und 11 bzw. 10) geteilt, die in axialer Richtung im Abstand voneinander angeordnet sind. Der erste Teil (6) der Statorwicklung zum schleifringlosen Erzeugen der Drehfelder in allen Stator- und Rotorbleckpaketteilen (3, 4 bzw. 8, 9) ist mit einer mehrphasigen Spannungsquelle (13) und der dazugehörige erste Teil (11) der Rotorwicklung mit dem zweiten Teil (10) derselben derart verbunden, daß die von den ersten Teilen (6 bzw. 11) der Stator- und der Rotorwicklungen erzeugten Durchflutungen entgegen der mechanischen Drehrichtung der Rotorwelle (7) und die von den zweiten Teilen (5 bzw. 10) der Stator- und der Rotorwicklungen erzeugten Durchflutungen in dieser Drehrichtung umlaufen.

Fig. 1

EP 0 158 897 A2

Croydon Printing Company Ltd

0158897

Reg.-Nr. 126 801

PATENTANWALT·
PHYS ...
...
... STUTTGART 1

ELEKTRA-FAURNDAU ELEKTRO-MASCHINENBAU GMBH.,7320 Göppingen

Drehfelderregte Stromrichtermaschine

Die Erfindung betrifft eine drehfelderregte Stromrichtermaschine mit in einem Maschinengehäuse angeordnetem Statorblechpaket für die Statorwicklung und auf der Rotorwelle angeordnetem Rotorblechpaket für die Rotorwicklung, die beim Betrieb ein Drehfeld erzeugt. Eine Stromrichtermaschine dieser Art ist z.B. in der DE-OS 24 13 266.9, in der Druckschrift H.Späth "Steuerverfahren für Drehstrommaschinen", Springer-Verlag 1983, und in der DE-PS 19 50 021 beschrieben. Bei diesen bekannten drehfelderregten Stromrichtermaschinen wird die Rotorwicklung zum Erzeugen des Drehfeldes über Schleifringe erregt.

In der DE-OS 24 37 534 wird darüber hinaus in Erwägung gezogen, an die Welle der Stromrichtermaschine eine Hilfsmaschine anzukuppeln, die als eine Induktionsmaschine mit bewickeltem Rotor ausgebildet ist, um den Rotor der Stromrichtermaschine schleifringlos mit einer Frequenz erregen zu können, die von der Netzfrequenz abweichen kann.Diese Maschinenkombination ist jedoch hinsichtlich ihrer Auslegungsmöglichkeiten
sehr beschränkt, weil der Unterschied der Polpaarzahlen
der Stromrichtermaschinen und der Hilfsmaschinen
sehr groß ist.

Der Erfindung liegt die Aufgabe zu Grunde, eine
drehfelderregte Stromrichtermaschine mit einem für
die Auslegung und konstruktive Gestaltung der Maschine
unbeschränkten Spielraum zu schaffen, bei der gleichzeitig der Rotor schleifringlos zur Erzeugung des Drehfeldes erregt werden kann.

Diese Aufgabe löst eine Stromrichtermaschine mit
den Merkmalen des Anspruchs 1.

Die erfindungsgemäße Stromrichtermaschine kann also
ohne Schleifring und ohne zusätzliche Hilfsmaschine
betrieben werden, wobei beide Teile zusammen gleichsinnig
zu der Drehmomentbildung beitragen, also antreibend
oder bremsend wirken. Sofern der Beitrag zur Drehmomentbildung gleich oder annähernd gleich sein soll,
wählt man gleiche oder nur geringfügig voneinander
abweichende Polpaarzahlen.
Gegenüber der bekannten Verwendung einer Hilfsmaschine
wird eine sehr weitgehende Vergrößerung des Auslegungsspielraumes und eine wesentliche Verringerung des
Aufwandes und gegenüber der bekannten Verwendung
von Schleifringen eine wesentliche Verringerung
des Verschleißes und der Wartung erreicht. Die erfindungsgemäße Verbindung der beiden Teile der Rotorwicklung und
der erfindungsgemäße Aufbau schaffen die Möglichkeit, daß
bei entsprechender Dimensionierung der Blechpakete
die einzelnen Spulengruppen der Rotorwicklung parallel geschaltet und alle Enden der Wicklungsstränge mit einem leitenden Ring an einer Stirnseite der Rotorwicklung als gemeinsamer Stirnpunkt.

Durch die ungewöhnliche erfindungsgemäße Unterteilung des Statorblechpaketes und des Rotorblechpaketes der Stromrichtermaschine in zwei in axialer Richtung im Abstand voneinander angeordnete Teile und durch die Verbindung des ersten Teiles der Statorwicklung zum schleifringlosen Erzeugen der Drehfelder in allen Stator- und Rotorblechpaketteilen mit einer mehrphasigen Spannungsquelle sowie durch die Verbindung des dazugehörigen ersten Teiles der Rotorwicklung mit dem zweiten Teil derselben, ist es nicht nur möglich, den Bereich innerhalb dessen die effektive Polpaarzahl (worunter die Summe der Polpaarzahlen der beiden bewickelten Statorblechpaketteile verstanden wird) der beiden Teile der Stromrichtermaschine gewählt werden kann, bei gleichbleibendem Außendurchmesser der Blechpakete und gleicher Nutzahl q pro Pol und Phase der beiden Teile gegenüber den gebräuchlichen drehfelderregten Stromrichtermaschinen zu verdoppeln, so daß beispielsweise auch Maschinen mit niedrigen Drehzahlen technisch sinnvoll realisierbar sind.Die Aufteilung der Blechpakete führt nämlich auch zu wirtschaftlichen Fertigungsmöglichkeiten der erfindungsgemäßen Stromrichtermaschine und eröffnet weitere günstige Auslegungsmöglichkeiten. Wird beispielsweise die effektive Polpaarzahl gegenüber der Polpaarzahl einer bekannten Stromrichtermaschine beibehalten, dann führt diese Aufspaltung zu einer günstigeren Gesamtstreuung, da bei jedem Teil der Blechpakete bei gleichbleibendem Blechpaketaußendurchmesser und gleichbleibenden mechanisch minimal zulässigen Zahnabmessungen gegenüber herkömmlichen schleifringbehafteten Stromrichtermaschinen die Nutzahl q pro Pol und Phase verdoppelt werden kann, wodurch die Oberwellenstreuung stark abnimmt. Günstige Gesamtstreuung bedeutet aber eine gute elektrische Ausnutzung der Maschine.

Man kann aber auch die Nutzahl pro Pol und Phase im Stator und Rotor bei der erfindungsgemäßen Maschine gegenüber der bekannten Maschine von der jetzt möglichen doppelten Zahl beispielsweise um 1 reduzieren. Dann kann vor allem bei kleineren bis mittleren Leistungen der Bohrungsdurchmesser verkleinert und dafür die axiale Länger der Bleckpakete vergrößert werden, so daß das Massenträgheitsmoment der Maschine günstiger wird.

Eine größere axiale Länge führt außerdem zu einer günstigeren Wärmeabgabefähigkeit, so daß sich beispielsweise eine Maschine in der Bauform IP 44 besser ausführen läßt. Die günstigere Wärmeabgabefähigkeit gilt im übrigen prizipiell für die erfindungsgemäße Maschine.

Weitere Vorteile hat die Aufteilung des Blechpaketes der Stromrichtermaschine für die Blechauswahl. Beispielsweise kann sowohl der erste Teil des Statorblechpaketes, der mit einer mehrphasigen Spannungsquelle verbunden ist, als auch eventuell der dazugehörige erste Teil des Rotorblechpaketes aus preisgünstigeren Blechen geringeren Silizium-Gehaltes geschichtet werden, da diese Bleche nur mit kleineren Frequenzen als die Ausgangsfrequenz des Zwischenkreisumrichters ummagnetisiert werden.

Einen größeren Spielraum öffnet die erfindungsgemäße Lösung auch durch die jetzt freie Wahl der Rotorspannung. Dadurch ist es beispielsweise möglich, die Rotorwicklungen als Einstab-Wellenwicklung mit Rechteckprofil-Lackdrähten auszuführen. Dies ergibt eine gute Ausnutzung des Nutzraumes, also einen hohen Nutfüllfaktor, und eine gute Wärmeabgabefähigkeit in Wickelkopf und Nutraum. Unabhängig hiervon ergibt bereits die Aufteilung der beiden Blechpakete in je zwei Teile günstigere Kühlungsverhältnisse wegen der besseren Wärmeabgabemöglichkeiten über die Wickelköpfe. Da bessere Kühlbedingungen eine höhere Stromdichte erlauben, können Nutbreite und Nuthöhe optimal auf eine minimale Nutstreuung abgestimmt werden. Bei Rechteckstäben kann man außerdem den Stromverdrängungseffekt ausnutzen, was bei jetzt höheren Frequenzen als Netzfrequenz in beiden Rotorteilen, wie sie bei der erfindungsgemäßen Auslegung auftreten, ebenfalls zu einer verringerten Gesamtstreuung führt.

Ferner ist die Strangzahl in den beiden Rotorteilen frei wählbar. Beispielsweise können fünfsträngige oder siebensträngige Wicklungen in Betracht gezogen werden, welche einen günstigeren Zonenfaktor, eine weitgehend oberwellenfreie Felderregerkurve und damit eine gute Sinusform der Statorspannung im zweiten Teil ergeben.
Schließlich können die Nutzahlen der beiden Teile unterschiedlich gewählt werden, was unter anderem die Möglichkeit eröffnet, unterschiedliche Bohrungsdurchmesser vorzusehen. Dabei können die Bohrungsdurchmesser so gewählt werden, daß der Wickelkopf des im Durchmesser größeren Rotorteiles die Wickelköpfe der Stator- und Rotorteile mit dem kleineren Bohrungsdurchmesser übergreift, wodurch die Baulänge der Maschine verringert werden kann.

Im Hinblick auf die maximal zulässige Aussteuerung des Umrichters ist eine möglichst weitgehende Unterdrückung der Oberwellen, insbesondere der Nut- und Nutungsoberwellen, vorteilhaft. Zu diesem Zwecke können die beiden Statorblechpakete und/oder die beiden Rotorblechpakete bis zu einer Nutteilung gegeneinander in Umfangsrichtung versetzt angeordnet sein. Dies wirkt sich günstig auf die Geräuschentwicklung aus. Eine andere vorteilhafte Maßnahme zur Unterdrückung von Oberwellen besteht darin, die Zonen der einzelnen Stränge beider Rotorwicklungen im oder gegen den Drehsinn des Rotors am Umfang gegeneinander versetzt anzuordnen. Diese Maßnahme wirkt ausgleichend für Läuferunsymmetrien, was auch für eine mögliche gegensinnige Wicklung der beiden Rotorwicklungen und eine Sternschaltung beider Rotorwicklungen gilt, wobei die Sternpunkte beider Rotorwicklungen leitend miteinander verbunden sein können.

Sofern die Schaltseiten der beiden Rotorwicklungsteile auf einander abgekehrten Seiten liegen, müssen Schaltverbindungen durch Kanäle in den Rotorblechpaketteilen geführt werden. Bei einer bevorzugten Ausführungsform sind deshalb die Schaltseiten der beiden Rotorwicklungteile einander zugewandt. Dies ist auch dann von Vorteil, wenn die zum Sternpunkt führenden Leiter beider Rotorwicklungteile mit einem elektrisch leitenden, zwischen den Blechpaketteilen angeordneten Ring verbunden sind, der isoliert abgestützt ist und als gemeinsamer Sternpunkt dient. Ein solcher Ring vereinfacht und verbessert die Herstellung der Sternverbindungen zwischen den einzelnen Strängen wesentlich. Eine weitere Vereinfachung bei der Herstellung der Sternverbindungen läßt sich dadurch erreichen, daß der Ring, der den gemeinsamen Sternpunkt bildet, gemäß der räumlichen Verteilung der zugeführten Leiter und deren Abmessungen axial genutet ist. Die Leiterenden brauchen dann nur in diese Nuten eingestemmt und in geeigneter Weise mit dem Ring elektrisch verbunden zu werden. Aus Gründen der Raumersparnis ist es vorteilhaft, die am Nutgrund der Rotornuten austretenden Leiter der einzelnen Spulengruppen beider Teile der Rotorwicklung zum Sternpunkt zu führen, da dann diese Leiter bei der Herstellung der übrigen Verbindungen nicht störend in Erscheinung treten. Selbstverständlich ist es aber auch möglich, je einen derartigen, jeweils den Sternpunkt der beiden Rotorteile bildenden Ring oder die jeweilige Sternschaltung auf den einander abgekehrten Seiten der beiden Rotorblechpaketteile vorzusehen, so daß die Leiterenden der Spulengruppen, die zum Sternpunkt verschaltet werden, auf einander abgekehrten Seiten der beiden Rotorblechpaketteile liegen, während die Leiterenden der Spulengruppen, die als Verbindungsleitungen im Sinne der gegenläufigen Durchflutungen in den beiden Rotorblechpaketteilen mit einander verbunden werden, auf den einander zugekehrten Seiten der Rotorblechpaketteile ausgeführt sind. Eine solche Verteilung der Leiterenden der beiden Teile der Rotorwicklung vereinfacht die Herstellung der nötigen Schaltverbindungen.

Um direkt die Leiterenden der Spulengruppen als Verbindungsleitungen verwenden zu können, was bei aus Runddraht gewickelten Spulen das Einbandagieren in den Wickelkopf ermöglicht und bei Stabwicklungen eine besonders günstige Stabführung und Bügelführung ermöglicht, sind vorzugsweise die Anschlußleitungen beider Teile der Rotorwicklung, die im Sinne der gegenläufigen Durchflutungen in den beiden Teilen des Rotorblechpaketes miteinander verbunden sein müssen, nicht nur auf den einander zugewandten Seiten der beiden Teile der Rotorwicklung vorgesehen, sondern bei Motorauslegungen mit einer Polzahl, die größer ist als die Rotorstrangzahl, etwa symmetrisch so am Umfang verteilt angeordnet, daß sich kreuzungsfreie Verbindungen für die zyklisch zu vertauschenden Strangwicklungsanfänge ergeben.

Um eine möglichst einfache Rotorwicklung vorsehen zu können, können die beiden Teile der Rotorwicklung jeweils zweisträngig ausgeführt sein. Zwar ist die Oberwellenstreuung ung bei einer solchen zweisträngigen Wicklungsausführung an sich größer als bei einer Wicklungsausführung mit einer höheren Strangzahl. Die negativen Auswirkungen einer zweisträngigen Rotorwicklung hinsichtlich der Streuung können jedoch zumindest teilweise durch eine dann höhere Anzahl von Nuten pro Pol und Phase bei sonst gleichen Blechabmessungen kompensiert werden. Hinzu kommt, daß bei Stabwicklungen die Nuten kleiner ausgeführt werden können, was zu kleinerer Nutstreuung führt. Bei einer zweisträngigen Rotorwicklung kann nämlich ein Wicklungsstrang durchgehend über beide Rotorblech-

- 7 -

pakete geführt sein. Bei dem anderen Wicklungsstrang sind dann nur die Strangwicklungsanfänge und Strangwicklungsenden gegenseitig vertauscht zu verbinden, so daß die Phasenfolge im Sinne der erforderlichen gegenläufigen Durchflutungen in den beiden Rotorblechpaketteilen um 180° el geändert ist. Man kann bei einer zweisträngigen Ausführung beider Teile der Rotorwicklung aber auch beide Wicklungsstränge durchgehend über beide Teile des Blechpaketes verlaufend ausführen und beim einen Wicklungsstrang oder bei beiden Wicklungssträngen gegensinnig beim Übergang vom einen zum anderen Blechpaketteil am Umfang um die entsprechende Anzahl von Nutteilungen weiterschreiten, so daß die Phasenfolge im Sinne gegenläufiger Durchflutungen der beiden Teile des Rotorblechpaketes um 180° el geändert wird.

Vorzugsweise ist bei einer zweisträngigen Ausführung der Rotorwicklung wenigstens einer der beiden Teile der Rotorwicklung als Stabwellen- oder Stabschleifenwicklung ausgeführt, da Stabwicklungen besonders einfach einzulegen und wegen der Vorformung und Teilleiter-Isolierung der Stäbe sicher und mit optimaler Wickelkopfausbildung auszuführen sind. Aber auch für Drahtspulenwicklungen ist eine zweisträngige Ausführung der Rotorwicklung vorteilhaft, weil die Rotorwickelköpfe kleiner werden oder bei durchgehend über beide Rotorblechpaketteile gewickelten Ausführungen der axiale Platzbedarf zwischen den Blechpaketteilen geringer wird und damit ein geringerer Abstand der beiden Blechpaketteile erreicht werden kann.

Ein wichtiger Vorteil der erfindungsgemäßen Lösung besteht darin, daß der erste Teil der Statorwicklung als Hochspannungswicklung ausgeführt sein kann. Damit lassen sich auch sehr hohe Maschinenleistungen erreichen, wie sie bisher nur mit gleichstromerregten Stromrichtermotoren ausgeführt werden konnten. Durch eine Ausführung des zweiten Teiles der Statorwicklung mit einer entsprechend der höheren Leistung erhöhten Strangzahl braucht man die Leistung pro Strang
nicht zu vergrößern, was bedeutet, daß man bei höheren Leistungen Stromrichterventile einsetzen kann, die ebenso
kostengünstig sind wie diejenigen für relativ geringe
Leistungen.

Im folgenden ist die Erfindung an Hand von in der Zeichnung dargestellten Ausführungsbeispielen im einzelnen erläutert.

Es zeigen:

Fig. 1   einen schematisch dargestellten Längsschnitt eines ersten Ausführungsbeispiels;

Fig. 2   ein   Blockschaltbild des ersten Ausführungsbeispiels;

Fig. 3   einen schematisch dargestellten Längsschnitt eines zweiten Ausführungsbeispiels;

Fig. 4 bis 7   vier Wickelschemata von vier verschiedenen Ausführungsformen der beiden
Teile der Rotorwicklung einer erfindungsgemäßen Maschine;

Fig. 8   eine perspektivisch dargestellte Ansicht der nur jeweils
einen Teil des Rotorblechpaketes umfassenden Formspulen
der Rotorwicklung gemäß Fig. 7;

Fig. 9   ein Wickelschema einer Stab-Schleifenwicklung für die beiden Teile des Rotorblechpaketes;

Fig. 10        eine perspektivisch dargestellte
               Ansicht einiger Elemente der Wicklung
               gemäß Fig.9;

Fig. 11 und 12    zwei Wickelschemata einer
               Stab-Wellenwicklung bzw. einer Schleif-
               spulen-Träufelwicklung für die beiden
               Teile des Rotorblechpaketes;

Fig. 13        ein unvollständig dargestelltes Wickelschema einer ersten Käfigwicklung für
               die Rotorblechpakete;

Fig. 14        eine unvollständig dargestellte
               Draufsicht auf den in Fig.13 wiedergegebenen Teil der Käfigwicklung;

Fig. 15        eine Darstellung entsprechend Fig.13
               einer zweiten Käfigwicklung für
               die Rotorblechpakete;

Fig. 16        eine Draufsicht auf den Verlauf der
               Stäbe der Wicklung gemäß Fig.15 im
               Kreuzungsbereich.

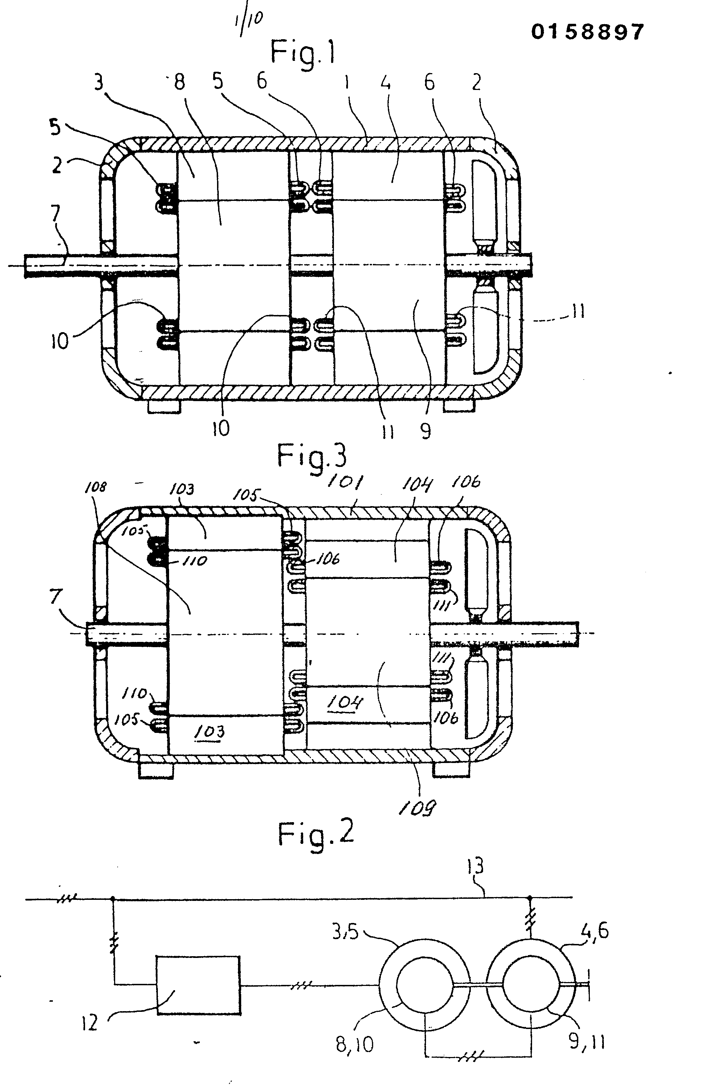

Eine drehfelderregte Stromrichtermaschine weist,
wie Fig.1 zeigt, ein in üblicher Weise ausgebildetes
Gehäuse auf, das aus einem zylindrischen Mittelteil
1 und zwei Lagerschilden 2 besteht. Im Mittelteil
1 sind in axialer Richtung im Abstand voneinander
zwei gleich große Teile 3 und 4 eines Statorblechpaketes angeordnet. Beide Teile 3 und 4 des Statorblechpaketes tragen eine Wicklung 5 bzw. 6, von
der nur die Wickelköpfe dargestellt sind.

Wegen der gegeneinanderweisenden Wickelköpfe ist die
Baulänge der Maschine um den Zwischenraum zwischen den
beiden Teilen 3 und 4 des Statorblechpaketes länger als
bei einer Maschine mit nicht unterteiltem Statorblechpaket.
Auch das Rotorblechpaket, das von der in den beiden Lagerschilden 2 gelagerten Rotorwelle 7 getragen wird, ist
in gleicher Weise wie das Statorblechpaket in zwei Teile
8 bzw. 9 unterteilt, die den gleichen Abstand voneinander
haben wie die zugeordneten Teile 3 bzw. 4 des Statorblechpaketes. Die Teile 8 und 9 des Rotorblechpaketes
tragen je eine Wicklung 10 bzw. 11, deren Anschlüsse
miteinander verbunden sind. Ein ebenfalls auf der Welle
7 angeordnetes Lüftrad sorgt für den notwendigen Kühlluftstrom, falls nicht zusätzlich oder anstelle der Eigenbelüftung eine Fremdbelüftung vorgesehen wird.

Die Anschlüsse der im Ausführungsbeispiel dreiphasig
ausgeführten Wicklung 5 des Teiles 3 des Statorblechpaketes ist, wie Fig.2 zeigt, an den Ausgang eines Umrichters
12 angeschlossen, der in bekannter Weise ausgebildet
ist und einen maschinengeführten Stromrichter mit Steuergerät, einen netzgeführten Stromrichter mit Steuergerät
und im Gleichstromzwischenkreis zwischen beiden Stromrichtern eine Glättungsdrossel enthält. Je nach Betriebszustand
arbeitet der maschinengeführte Stromrichter als Wechselrichter oder Gleichrichter und der netzgeführte Stromrichter als Gleichrichter oder Wechselrichter.

Die Wicklung 6 des Teiles 4 des Statorblechpaketes ist,
da das speisende Netz 13 dreiphasig ist, ebenfalls dreiphasig ausgebildet und an das Netz 13 angeschlossen. Selbstverständlich kann die erfindungsgemäße Stromrichtermaschine
aber auch an andere Energiequellen mit anderer Phasenzahl
und/oder anderer Frequenz angeschlossen werden.

Die Polpaarzahl der Wicklung 6 ist dieselbe wie die Polpaarzahl der Wicklung 5, jedoch könnten die Polpaarzahlen
beider Wicklungen auch verschieden sein. Der Anschluß
der Wicklung 6 an das Netz 13 und die Verbindung der
Wicklung 11 mit der Wicklung 10 sind hinsichtlich der
Phasenfolge so gewählt, daß die von den Wicklungen 6
und 11 erzeugten Durchflutungen entgegengesetzt zur Drehrichtung der Welle 7 umlaufen. Damit arbeitet der aus
dem Teil 4 des Statorblechpaketes, dem Teil 9 des Rotorblechpaketes und den Wicklungen 6 bzw. 11 bestehende
Teil der Maschine im selben Sinne wie der andere Teil
der Maschine, also je nach Betriebsbedingung als Motor
oder als Generator.

Das in Fig. 3 dargestellte zweite Ausführungsbeispiel
unterscheidet sich von dem ersten Ausführungsbeispiel
dadurch, daß der Bohrungsdurchmesser des in Fig. 32 rechts
dargestellten Teils 104 des Statorblechpaketes kleiner
ist als derjenige des anderen Teils 103 des Statorblechpaketes, und zwar um so viel, daß die Wickelköpfe der
im erstgenannten Teil 104 liegenden Wicklung 106 vom
Wickelkopf der Wicklung 110 des im Durchmesser größeren
Teiles 108 des Rotorblechpaketes übergriffen werden können.

- 11 -

Der axiale Abstand der beiden Teile 103 und 104 des Statorblechpaketes und der beiden Teile 108 und 109 des Rotorblechpaketes braucht dann nicht wie bei dem Ausführungsbeispiel gemäß den Fig. 1 und 2 etwas mehr als die Summe der
gegeneinander weisenden Wickelköpfe zu sein, sondern nur
etwas größer als die axiale Länge des längeren der gegeneinander weisenden Wickelköpfe. Im Ausführungsbeispiel ist
ferner der Außendurchmesser des Teiles 104 des Statorblechpaketes nicht gleich dem Außendurchmesser des Teiles 103
gewählt, was möglich wäre, sondern kleiner. Der Mittelteil
101 des Maschinengehäuses ist deshalb im Bereich des Teiles
104 des Statorblechpaketes mit radialen Rippen versehen, die
den Teil 104 zentrieren und festhalten. Wegen der übrigen
Einzelheiten wird auf die Ausführungen zu dem ersten Ausführungsbeispiel Bezug genommen, weil insofern zwischen beiden
Ausführungsbeispielen keine Unterschiede bestehen.

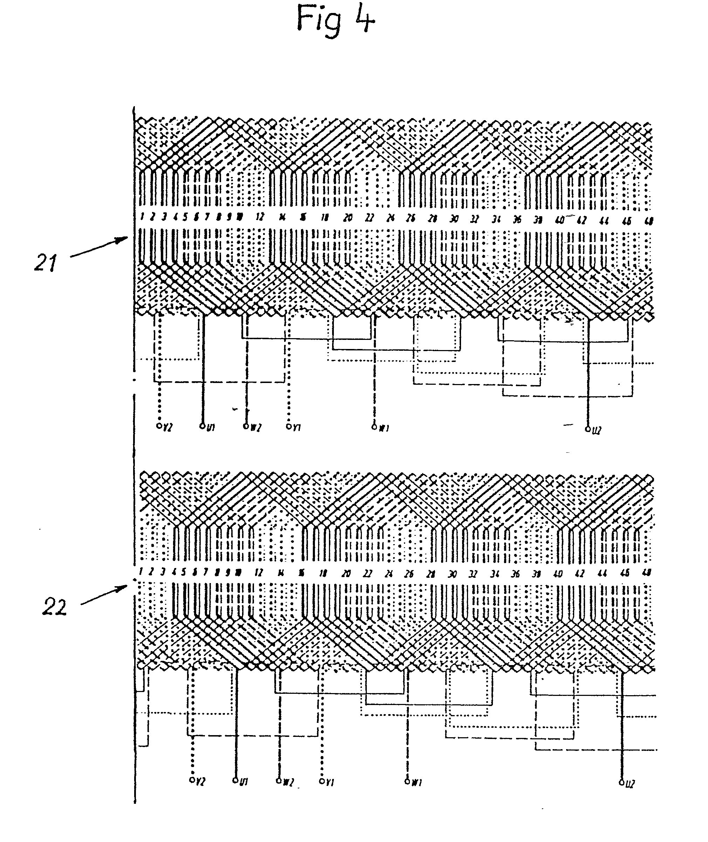

Zwei Rotorwicklungen, die für Ausführungsformen der Rotorblechpaketteile mit gleicher Nutzahl geeignet sind, zeigt
Fig. 4. Die als Ganzes mit 21 bezeichnete Rotorwicklung für
den Teil 9 des Rotorblechpaketes unterscheidet sich von der
als Ganzes mit 22 bezeichneten Wicklung für den Teil 8 des
Rotorblechpaketes nur dadurch, daß die Zonen der einzelnen
Stränge um drei Nuten in Umfangsrichtung versetzt sind.
Während die eine Spulenseite der an der Klemme U1 der Wicklung 21 beginnenden Spule in der ersten Nut liegt, liegt
die entsprechende Spulenseite der entsprechenden Spule der
Wicklung 22 in der vierten Nut. Durch diese Versetzung der
Zonen werden Oberwellen unterdrückt. Außerdem wirkt diese
Versetzung ausgleichend auf Rotorunsymmetrien.

Die Schaltseite der in Fig. 4 dargestellten Wicklung 21,
d.h. diejenige Seite, auf der die Anschlüsse und Schaltverbindungen liegen, ist der Wicklung 22 zugekehrt, während
deren Schaltseite auf der der Wicklung 21 abgekehrten Seite
liegt.

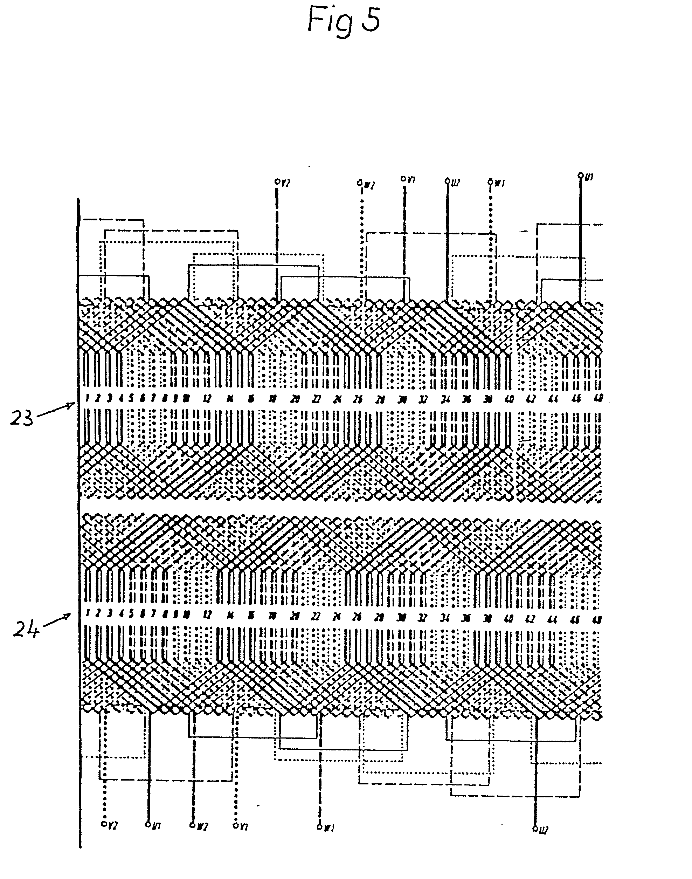

Im Gegensatz hierzu haben die beiden in Fig. 5 dargestellten Rotorwicklungen 23 und 24 ihre Schaltseiten auf der der anderen Wicklung abgekehrten Seite. Im übrigen sind die Wicklungen 23 und 24, die wie die Wicklungen 21 und 22 dem Teil 9 des Rotorblechpaketes bzw. dem Teil 8 des Rotorblechpaketes zugeordnet sind, gleich ausgebildet, jedoch gegensinnig gewickelt. Während die Rückleitung der an der Klemme U1 der Wicklung 24 in Nut 1 beginnenden Teilspule in der Nut 13 liegt, liegt die Rückleitung der entsprechenden Teilspule der Wicklung 23 in Nut 37, also um zwei Polteilungen versetzt. Der Vorteil der bei beiden Wicklungen 23 und 24 außen liegenden Schaltseite besteht darin, daß bei beiden Wicklungen die Schaltseite gut zugänglich ist, wenn bei schon auf der Welle aufgeblechten Blechpaketteilen bewickelt wird. Die gegensinnig gewickelten Wicklungen wirken auf Rotorunsymmetrien stark ausgleichend.

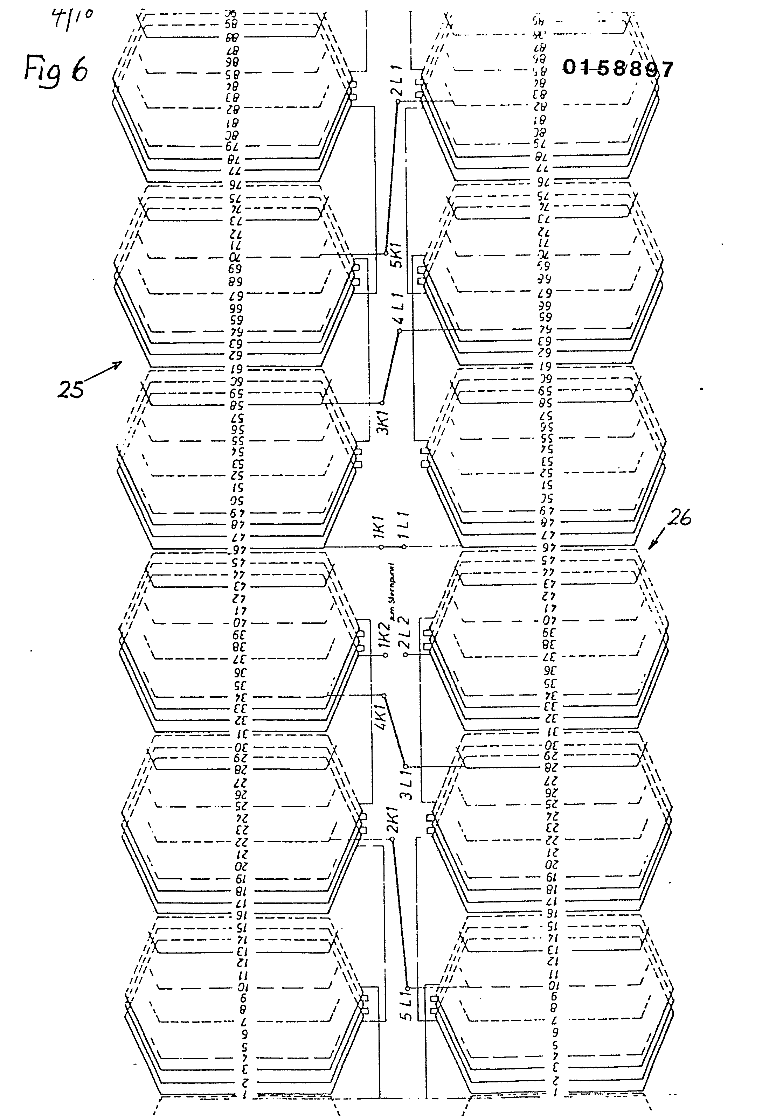

Wie Fig. 6 zeigt, können die beiden als Ganzes mit 25 bzw. 26 bezeichneten Rotorwicklungen für den Teil 9 bzw. den Teil 8 ihre Schaltseiten auch auf der der jeweils anderen Wicklung zugekehrten Seite haben. Beide Wicklungen 25 und 26 sind gleich ausgebildet, nämlich als gesehnte Zweischichtwicklung für ein Rotorblechpaket mit neunzig Nuten. Beide Wicklungen 25 und 26 sind sechspolig ausgebildet und haben fünf Stränge, deren Anfänge mit 1K1, 2K1, 3K1, 4K1 und 5K1 bzw. 1L1, 2L1, 3L1, 4L1 und 5L1 bezeichnet sind. Die Enden dieser Stränge, von denen nur die mit 1K2 und 2L2 bezeichneten Stränge dargestellt sind, sind alle zu einem gemeinsamen Sternpunkt geführt, der durch einen konzentrisch zur Maschinenwelle zwischen den beiden Rotorblechpaketen angeordneten, elektrisch leitenden Ring gebildet ist, der elektrisch isoliert auf der Rotorwelle 7 oder an einem der Rotorblechpaketteile abgestützt ist. Dieser Ring hat, wo die mit ihm zu verbindenden Enden aus dem Rotorblechpaket austreten, in axialer Richtung verlaufende Nuten, in welche die jeweiligen Strangenden eingelegt werden. Der Durchmesser des Ringes ist etwa gleich dem Durchmesser der Rotorblechpaketteile am Nutgrund gewählt, da vorzugsweise die Strangenden unten in der Nut liegen. Die Strangenden können hierdurch geradlinig an den Ring herangeführt und dort mit diesem elektrisch verbunden, beispielsweise verpreßt werden. Auch die zwischen den Stranganfängen der beiden Wicklungen 25 und 26 auszuführenden Verbindungsleitungen haben dadurch, daß die Stranganfänge etwa symmetrisch am Umfang verteilt vorgesehen sind, einen günstigen Verlauf, wie Fig. 6 zeigt. Sie sind vor allem kreuzungsfrei ausführbar und haben eine geringe Länge, so daß die Leiterenden bei zu Spulengruppen durchgehend gewickeltem Runddraht oder bei Stabwicklungen der verlängerte Leiterstab direkt als Verbindungsleitungen verwendet werden können.

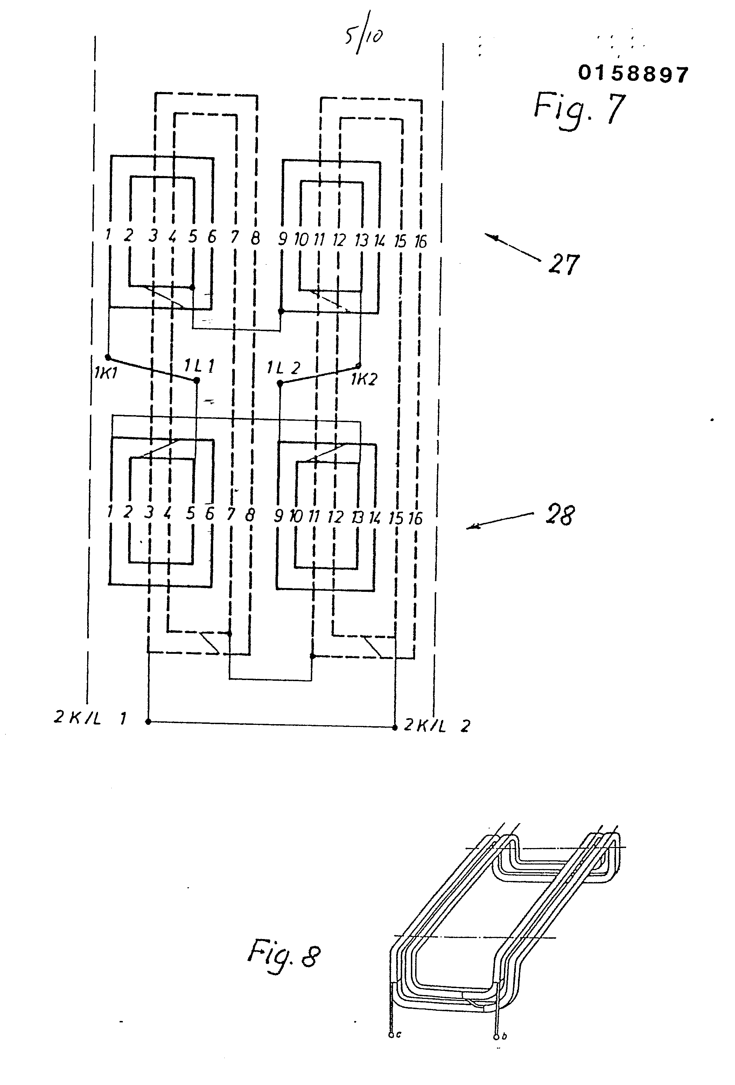

Wie Fig. 7 zeigt, können die beiden Wicklungen der Rotorblechpakete 8 und 9 auch durchgehende, in beiden Rotorblechpaketteilen liegende Wicklungsstränge aufweisen. Fig. 7 zeigt eine Einschicht-Zweietagenwicklung für jeweils 16 Nuten der beiden Rotorblechpakete und eine zweisträngige vierpolige Ausführung. Die beiden in Fig. 7 mit ausgezogenen Linien dargestellten Spulengruppen, jeder der beiden als Ganzes mit 27 bzw. 28 bezeichneten Wicklungen für den Teil 9 bzw. den Teil 8 des Rotorblechpaketes haben die in Fig. 8 dargestellte Form. Ihre Spulenseiten erstrecken sich nur über den einen Teil des Rotorblechpaketes und sie sind zur Bildung des einen Stranges in der aus Fig. 7 ersichtlichen Weise zusammengeschaltet. Der andere Strang beider Wicklungen 27 und 28 wird durch die beiden mit gestrichelten Linien in Fig. 7 dargestellten Spulengruppen gebildet, deren Spulenseiten sich über beide Teile des Rotorblechpaketes erstrekken. Die beiden Wicklungen 27 und 28 haben hierdurch eine äußerst einfache Form und sind auch einfach in die beiden Teile des Rotorblechpaketes einzulegen. Die Schaltverbindungen des zweiten Stranges sind ebenfalls in Fig. 7 eingetragen. Hier entfallen die Schaltverbindungen, die zwischen dem ersten Strang der Wicklung 27 und demjenigen der Wicklung 28 erforderlich sind.

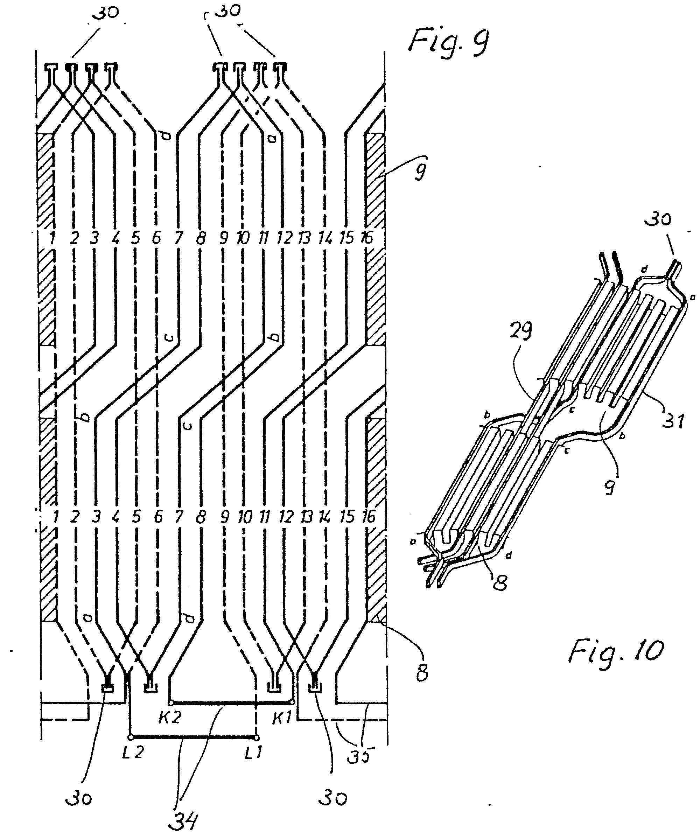

Wie die Fig. 9 bis 12 zeigen, können alle Stränge der Rotorwicklung sich durchgehend über beide Rotorblechpaketteile 8 und 9 hinwegerstrecken. In den Fig. 9 und 10 ist dies an Hand einer zweisträngigen Stab-Schleifenwicklung für sechzehn Nuten in 4-poliger Ausführung dargestellt, wobei wie bei den zuvor beschriebenen Wicklungen die Wicklungsausführung und die Schaltverbindungen so gewählt sind, daß gegenläufige Drehfelder entstehen. Der eine Strang, der in Fig. 9 mit gestrichelten Linien dargestellt ist, besteht aus geradlinigen Stäben 29, die in aufeinander ausgerichteten Nuten beider Rotorblechpaketteile liegen und deren beide Enden im erforderlichen Maße zur Herstellung der Lötverbindungen 30 abgekröpft sind. Die den anderen in Fig. 9 mit ausgezogenen Linien dargestellten Strang bildenden Stäbe 31 sind in dem zwischen den beiden Teilen der Blechpakete liegenden Abschnitt im erforderlichen Maße abgekröpft. Ferner haben ihre beiden Enden die für die Herstellung der Lötverbindungen erforderlichen Abkröpfungen. Da die Stäbe 29 und 31 entsprechend vorgeformt werden können, läßt sich diese Wicklung sehr einfach herstellen, wozu auch die gute Zugänglichkeit aller Stellen, an denen Lötverbindungen 30 oder Schaltverbindungen 34 und 35 hergestellt werden müssen, beiträgt. Zur Verdeutlichung der Form und Lage der einzelnen Wicklungsteile sind in den Fig. 9 und 10 die Teile 8 und 9 des Rotorblechpaketes angedeutet.

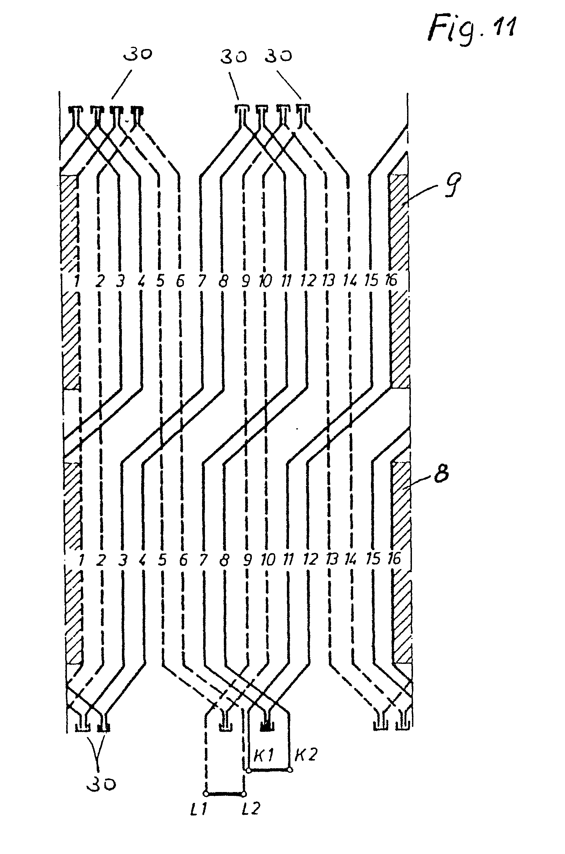

Statt der in den Fig. 9 und 10 dargestellten Stab-Schleifenwicklung kann, wie die Fig. 11 zeigt, auch eine Stab-Wellenwicklung verwendet werden. Die Vorteile sind grundsätzlich dieselben wie diejenigen der Stab-Schleifenwicklung. Man erhält jedoch eine günstigere Lage der miteinander zu verbindenden Enden K1 und K2 sowie L1 und L2 der beiden Stränge K und L sowie den Wegfall weiterer Schaltverbindungen, wie z.B. der Schaltverbindung 35 der Stab-Schleifenwicklung nach Fig.9.

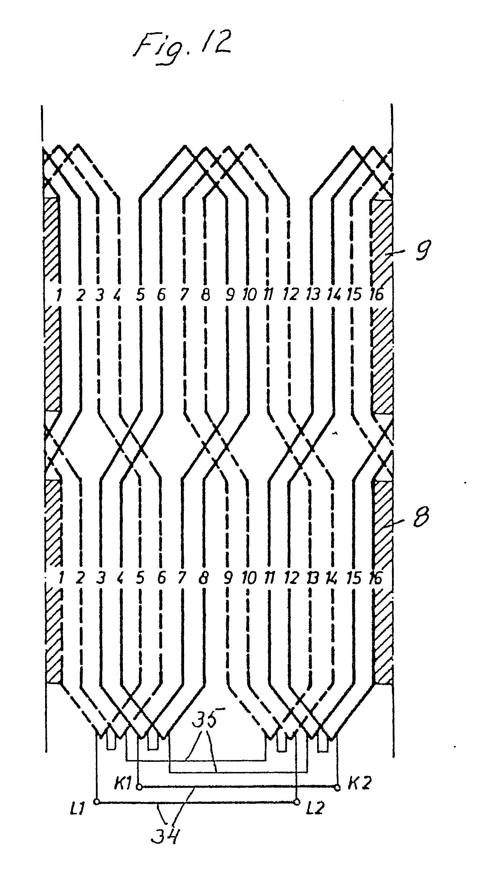

Die Fig. 12 zeigt ein Ausführungsbeispiel einer Schleifen-spulen-Träufelwicklung. Bei beiden Wicklungen nach den Fig. 9, 11 und 12 wird durch eine Versetzung der Wicklungsstränge gegeneinander am Übergang von dem Teil 8 auf den Teil 9 des Rotorblechpaketes die Phasenfolge im Sinne gegenläufiger Durchflutung in den beiden Teilen 8 und 9 geändert. Diese gegenseitige Versetzung der Wicklungsstränge wird bei den Wicklungen nach Fig. 9 und 11 dadurch erreicht, daß der mit gestrichelten Linien dargestellte Wicklungsstrang nach dem Übergang vom Teil 8 auf den Teil 9 unversetzt in der gleichen Nutenteilung weiterläuft, während der mit ausgezogenen Linien dargestellte Wicklungsstrang im Wicklungssinn um vier Nutenteilungen versetzt im Teil 9 weiterläuft. Bei der Wicklung nach Fig. 12 sind beide Wicklungsstränge in entgegengesetzter Richtung um je zwei Nutenteilungen auf dem Teil 9 versetzt.

Beim dargestellten Ausführungsbeispiel bewirken die Schaltverbindungen 35 eine Reihenschaltung von Spulengruppen. Diese Spulengruppen können zur Vermeidung der Schaltverbindungen 35 auch parallel geschaltet werden, da die Strangspannungen im Rotor frei wählbar sind. Die Enden K1 und L1 oder K2 und L2 dürfen zusätzlich miteinander verbunden werden, weil es sich um die Enden von getrennten Stromkreisen handelt, die durch die beiden Stränge K und L gebildet sind. Man kann also alle Strangenden mit einem Ring verbinden, wie er z.B. bei der Erläuterung der Fig. 6 beschrieben ist. Damit entfallen alle Schaltverbindungen 34 und 35.

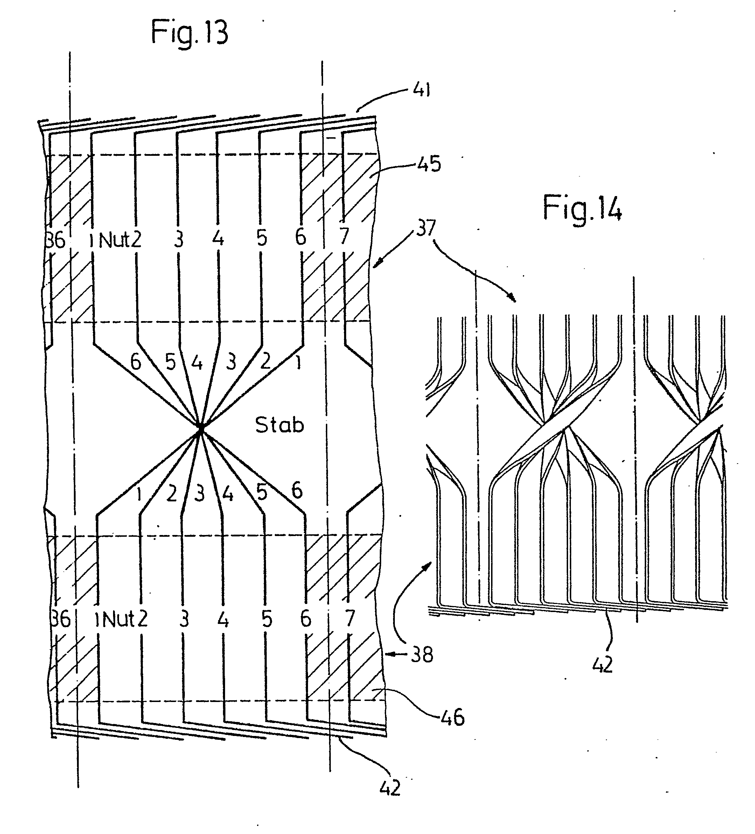

Wie die Fig. 13 bis 16 zeigen, kann die Wicklung für
die beiden Rotorblechpakete auch als Kurzschlußkäfig
ausgebildet sein. Bei dem Ausführungsbeispiel gemäß Fig.
13 und 14 weisen sowohl das eine Rotorblechpaket 45 als
auch das andere Rotorblechpaket 46 je sechs Nuten pro
Pol auf. Die in diesen Nuten liegenden Stableiter sind
so vorgeformt, daß sie innerhalb der Polteilung des Rotorblechpaketes 46 zyklisch vertauscht sind gegenüber der
entsprechenden Polteilung des Rotorblechpaketes 45. Dies
heißt, daß die sechs in den Nuten 1 bis 6 des Rotorblechpaketes 46 liegenden Stäbe, welche für die dargestellte Polteilung den Wicklungsteil 38 bilden, in der entsprechenden Polteilung des Rotorblechpaketes 45 in den
Nuten 6 bis 1 liegen. Dabei haben jeweils zwei Stäbe
die gleiche Form, so daß nur drei verschiedene Schablonen
für die Vorformung der Stäbe erforderlich sind.

Die über die einander abgekehrten Stirnseiten der Rotorblechpakete 45 und 46 überstehenden Endabschnitte der
Stäbe könnten mit je einem Kurzschlußring verbunden sein.
Im Ausführungsbeispiel sind jedoch diese Endabschnitte
alle in der gleichen Umfangsrichtung abagewinkelt, so
daß sie sich überlappen. In diesem Überlappungsbereich
sind die Stabenden mechanisch und elektrisch miteinander
zur Bildung der beiden Kurzschlußringe 41 und 42 verbunden.

Sofern, wie im Ausführungsbeispiel, die Stableiter hochkant
in den Nuten liegen, kann man dadurch, daß die Stäbe
im Kreuzungsbereich um 90° gegenüber den in den Nuten
liegenden Abschnitten verdreht sind, eine relativ geringe
Höhe des Stabbündels im Kreuzungsbereich erreichen.

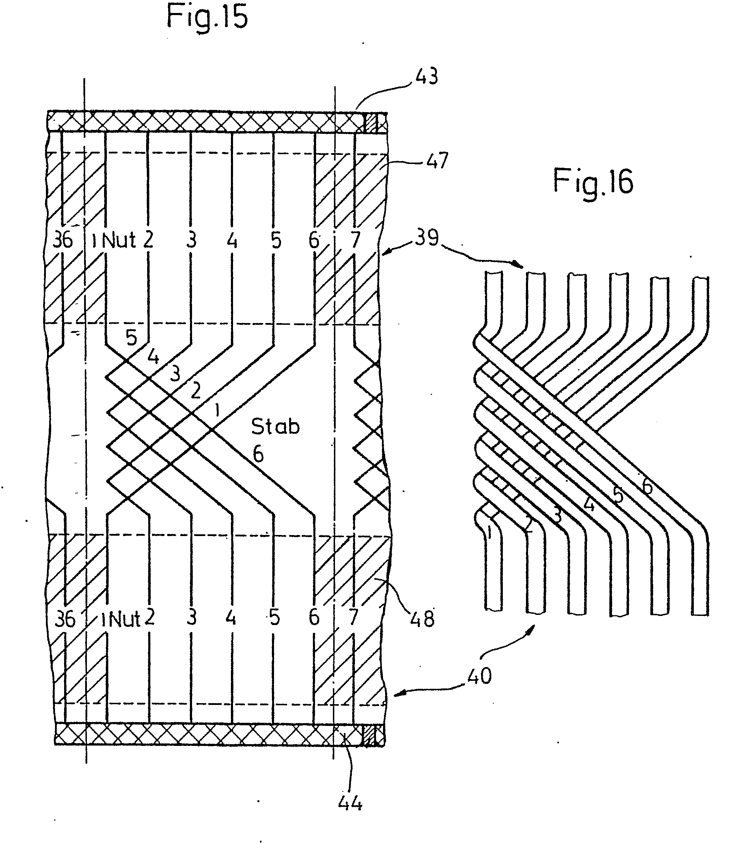

Auch bei dem Ausführungsbeispiel gemäß den Fig. 15 und
16 sind die Stäbe des einen Teils 39 der Kurzschlußwicklung innerhalb der Polteilung zyklisch vertauscht gegenüber
dem in der entsprechenden Polteilung liegenden Wicklungsteil 40. Die Stabenden sind mit zwei Kurzschlußringen
43 und 44 verbunden. Selbstverständlich könnten diese
beiden Kurzschlußringe aber auch durch die abgebogenen
Endabschnitte der Stäbe gebildet sein.

Im Gegensatz zu der Wicklung gemäß den Fig.13 und 14
kreuzen sich die Stäbe nicht an einer einzigen Stelle.
Vielmehr sind die Stäbe so vorgeformt, daß an jeder Kreuzungsstelle nur zwei Stäbe übereinander liegen. Auch
hier haben jedoch die Stäbe 1 und 6 sowie 2 und 5 als
auch 3 und 4 die gleiche Form. Es sind deshalb auch hier
nur drei verschiedene Schablonen erforderlich. Die für
eine Polteilung erforderlichen Stäbe lassen sich aber
auch in der Weise formen, wie dies, in etwas abgewandelter
Form für eine Gruppe von Teilleitern, für Hillebrand-
Fleischmann— Stäbe bekannt ist.

Alle in der vorstehenden Beschreibung erwähnten sowie
auch die nur allein aus der Zeichnung entnehmbaren Merkmale
sind als weitere Ausgestaltungen Bestandteile der Erfindung, auch wenn sie nicht besonders hervorgehoben und
insbesondere nicht in den Ansprüchen erwähnt sind.

- I -

A n s p r ü c h e

1. Drehfelderregte Stromrichtermaschine mit in einem
   Maschinengehäuse (1) angeordnetem Statorblechpaket
   (3, 4) für die Statorwicklung (5, 6) und auf der Rotorwelle (7) angeordnetem Rotorblechpaket (8, 9) für
   die Rotorwicklung (10, 11), die beim Betrieb ein Drehfeld erzeugt, dadurch gekennzeichnet, daß das Statorblechpaket (3, 4) und das Rotorblechpaket (8, 9) und
   damit die zugehörigen Wicklungen (5, 6 bzw. 10, 11)
   in einen ersten und einen zweiten Teil (4 bzw. 3,
   9 bzw. 8 und 6 bzw. 5 und 11 bzw. 10) geteilt sind,
   die in axialer Richtung im Abstand voneinander angeordnet sind, daß der erste Teil (6) der Statorwicklung
   zum schleifringlosen Erzeugen der Drehfelder in allen
   Stator- und Rotorblechpaketteilen (3, 4 bzw. 8,9)
   mit einer mehrphasigen Spannungsquelle (13) und der
   dazugehörige erste Teil (11) der Rotorwicklung mit
   dem zweiten Teil (10) derselben derart verbunden sind,
   daß die von den ersten Teilen (6, bzw. 11) der Stator-
   und der Rotorwicklungen erzeugten Durchflutungen entgegen der mechanischen Drehrichtung der Rotorwelle (7)
   und die von den zweiten Teilen (5 bzw. 10) der Stator-
   und der Rotorwicklungen erzeugten Durchflutungen in
   dieser Drehrichtung umlaufen.

2. Maschine nach Anspruch 1, dadurch gekennzeichnet,
   daß der erste und der zweite Stator- und Rotorteil
   beide etwa zu gleichen Anteilen und gleichgerichtet
   zur Drehmomentenbildung beitragen.

3. Maschine nach Anspruch 1 oder 2, dadurch gekennzeichnet,
   daß die beiden bewickelten Blechpakete gleiche oder
   nur geringfügig voneinander abweichende Polpaarzahlen haben.

4. Maschine nach einem der Ansprüche 1 bis 3, dadurch gekennzeichnet, daß die Länge beider Teile (3, 4, 8, 9) des Statorblechpaketes und des Rotorblechpaketes wenigstens annähernd gleich ist.

5. Maschine nach einem der Ansprüche 1 bis 4, dadurch gekennzeichnet, daß der Bohrungsdurchmesser beider Teile (3, 4) des Statorblechpaketes gleich ist.

6. Maschine nach einem der Ansprüche 1 bis 4, dadurch gekennzeichnet, daß der Bohrungsdurchmesser des ersten Teiles (104, 109) der Blechpakete um so viel kleiner als der Bohrungsdurchmesser des zweiten Teils der Blechpakete (103, 108) gewählt ist, daß die Wickelköpfe des zweiten Teiles (110) der Rotorwicklung die Wickelköpfe des ersten Teiles (106) der Statorwicklung zu übergreifen vermögen oder umgekehrt.

7. Maschine nach einem der Ansprüche 1 bis 6, dadurch gekennzeichnet, daß im ersten Teil (4, 104) des Statorblechpaketes und/oder im dazugehörigen ersten Teil (9, 109) des Rotorblechpaketes preisgünstigere Bleche geringeren Siliziumgehaltes als in dem zweiten Teil (3, 103) des Statorblechpaketes vorgesehen sind.

8. Maschine nach einem der Ansprüche 1 bis 7, dadurch gekennzeichnet, daß die beiden Statorblechpaketteile um bis zu eine Nutteilung gegeneinander in Umfangsrichtung versetzt angeordnet sind.

9. Maschine nach einem der Ansprüche 1 bis 8, dadurch gekennzeichnet, daß die beiden Rotorblechpaketteile um bis zu eine Nutteilung gegeneinander in Umfangsrichtung versetzt angeordnet sind.

10. Maschine nach einem der Ansprüche 1 bis 9, dadurch
gekennzeichnet, daß die Zonen der einzelnen Stränge
beider Teile (21, 22; 23, 24) der Rotorwicklung im
oder gegen den Drehsinn des Rotors in Umfangsrichtung
gegeneinander versetzt sind.

11. Maschine nach einem der Ansprüche 1 bis 10, dadurch
gekennzeichnet, daß die beiden Teile der Rotorwicklung
gegensinnig gewickelt sind.

12. Maschine nach einem der Ansprüche 1 bis 11, dadurch
gekennzeichnet, daß die beiden Teile (25, 26) der
Rotorwicklung in Stern geschaltet sind.

13. Maschine nach Anspruch 12, dadurch gekennzeichnet,
daß die beiden Sternpunkte miteinander leitend verbunden sind.

14. Maschine nach einem der Ansprüche 1 bis 13, dadurch
gekennzeichnet, daß die Schaltseiten beider Teile
(25, 26) der Rotorwicklung einander zugewandt sind.

15. Maschine nach einem der Ansprüche 1 bis 14, dadurch
gekennzeichnet, daß die Wicklungsanfänge der beiden
Teile der Rotorwicklung auf den einander zugewandten
Seiten der beiden Teile des Rotorblechpaketes sind
und die Wicklungsenden jeweils auf den anderen Seiten
dieser Teile liegen.

16. Maschine nach einem der Ansprüche 12 bis 15, dadurch
gekennzeichnet, daß die zum Sternpunkt führenden
Leiter beider Teile (25, 26) der Rotorwicklung mit
einem leitenden, zwischen den Rotorblechpaketteilen
liegenden Ring verbunden sind, der isoliert abgestützt
ist und als gemeinsamer Sternpunkt dient.

17. Maschine nach Anspruch 16, dadurch gekennzeichnet, daß der den gemeinsamen Sternpunkt bildende Ring gemäß der räumlichen Verteilung der zugeführten Leiter und deren Abmessungen axial genutet ist.

18. Maschine nach Anspruch 16 oder 17, dadurch gekennzeichnet, daß die am Nutgrund der Rotornuten austretenden Leiter der einzelnen Spulengruppen beider Teile der Rotorwicklung zum Sternpunkt geführt sind.

19. Maschine nach einem der Ansprüche 1 bis 18, dadurch gekennzeichnet, daß die Schaltseiten beider Teile (25, 26) der Rotorwicklung einander zugewandt sind und die Anschlußleitungen dieser Teile, die im Sinne der gegenläufigen Durchflutung der beiden Rotorblechpaketteile miteinander verbunden sind, bei einer Polzahl, die größer ist als die Rotorstrangzahl, etwa symmetrisch so am Umfang verteilt angeordnet sind, daß sich kreuzungsfreie Verbindungen für die zyklisch zu vertauschenden Strangwicklungsanfänge ergeben.

20. Maschine nach einem der Ansprüche 1 bis 19, dadurch gekennzeichnet, daß die aus dem Rotorblechpaket austretenden Leiterabschnitte der Wicklungsstränge beider Teile der Rotorwicklung als Verbindungsleitungen der beiden Teile verwendet sind.

21. Maschine nach einem der Ansprüche 1 bis 19, dadurch gekennzeichnet, daß die beiden Teile (27, 28) der Rotorwicklung jeweils zweisträngig ausgebildet sind, wobei der eine Wicklungsstrang durchgehend über beide Rotorblechpaketteile geführt ist und bei dem anderen Wicklungsstrang die Strangwicklungsanfänge und Strangwicklungsenden gegenseitig vertauscht verbunden sind, so daß die Phasenfolge im Sinne gegenläufiger Durchflutungen in den beiden Rotorblechpaketteilen um
180° geändert ist.

22. Maschine nach einem der Ansprüche 1 bis 19, dadurch
gekennzeichnet, daß die beiden Teile der Rotorwicklung
jeweils zweisträngig ausgeführt sind und beide Wicklungsstränge durchgehend über beide Teile (8, 9)
des Rotorblechpaketes geführt sind, wobei durch eine
gegenseitige Versetzung der Stränge um eine entsprechende Anzahl von Nutenteilungen auf dem einen Teil
(9) des Rotorblechpaketes die Phasenfolge im Sinne
gegenläufiger Durchflutungen in den beiden Teilen
(8, 9) geändert wird.

23. Maschine nach einem der Ansprüche 1 bis 22, dadurch
gekennzeichnet, daß wenigstens der eine Teil der
Rotorwicklung als Stabwellenwicklung (Fig.11), als
Schleifenspulen-Träufelwicklung (Fig.12) oder als
Stabschleifenwicklung (Fig.9) ausgeführt ist.

24. Maschine nach einem der Ansprüche 1 bis 23, dadurch
gekennzeichnet, daß der erste Teil (6, 106) der Statorwicklung als Hochspannungswicklung ausgeführt ist.

25. Maschine nach einem der Ansprüche 1 bis 23, dadurch
gekennzeichnet, daß der zweite Teil (5, 105) der
Statorwicklung mit einer Strangzahl größer als drei
ausgeführt ist.

26. Maschine nach einem der Ansprüche 21 bis 25, dadurch
gekennzeichnet, daß die einzelnen Spulengruppen der
Rotorwicklung parallel geschaltet sind und daß alle
Enden (K1, K2, L1, L2) der Wicklungsstränge (K, L)
mit einem leitenden Ring an einer Stirnseite der
Rotorwicklung verbunden sind.

0158897

27. Maschine nach einem der Ansprüche 1 bis 12, dadurch gekennzeichnet, daß die beiden Teile (37, 38, bzw. 39, 40) der Rotorwicklung durch einen Kurzschlußkäfig mit je einem Kurzschlußring (41 - 44) auf den einander abgewandten Seiten der beiden Rotorblechpakete (45, 46; 47, 48) gebildet sind.

28. Maschine nach Anspruch 27, dadurch gekennzeichnet, daß innerhalb jeder Polteilung die in den Nuten des einen Rotorblechpaketes (45; 47) liegenden Stäbe zyklisch vertauscht in den Nuten der entsprechenden Polteilung des anderen Rotorblechpaketes (46; 48) liegen.

29. Maschine nach Anspruch 27 oder 28, dadurch gekennzeichnet, daß der Kurzschlußkäfig vorgeformte Stäbe aufweist.

30. Maschine nach Anspruch 29, dadurch gekennzeichnet, daß die Stäbe an ihren Enden in Umfangsrichtung des Rotorblechpaketes (45, 46) abgebogen sind und daß die sich überlappenden, abgebogenen Enden zur Bildung der Kurzschlußringe (41, 42) miteinander mechanisch und elektrisch leitend verbunden sind.

Fig.1

0158897

1/10

Fig.3

Fig.2

ELEKTRA-FAURNDAU          Reg.-Nr. 126 801

Fig 4

2/10

0158897

21

22

0158897

Fig 5

ELEKTRA-FAURNDAU........   Reg.-Nr. 126 801

Fig 6

0158897

25

26

1K2 — 2L2 — zum Sternpunkt

ELEKTRA-FAURNDAU......          Reg.-Nr. 126 801

0158897

Fig. 7

27

1 2 3 4 5 6 7 8    9 10 11 12 13 14 15 16

1K1          1L1    1L2          1K2

28

1 2 3 4 5 6 7 8    9 10 11 12 13 14 15 16

2K/L 1                              2K/L 2

Fig. 8

0158897

Fig. 9

Fig. 10

0158897

Fig. 11

30    30   30

9

8

1 2 3 4 5 6 7 8 9 10 11 12 13 14 15 16

1 2 3 4 5 6 7 8 9 10 11 12 13 14 15 16

K1   K2

30

L1   L2

ELEKTRA-FAURNDAU......     Reg.-Nr. 126 801

Fig. 12

ELEKTRA-FAURNDAU....... Reg.-Nr. 126 801

Fig.13

41

45

Fig.14

37

36  1 Nut 2   3   4   5   6   7

6   5   4   3   2   1

Stab

1   2   3   4   5   6

36  1 Nut 2   3   4   5   6   7

38

42

46

42

Fa. ELEKTRA-FAURNDAU......

Reg-Nr. 126 801

0158897

## Fig.15

43

47

36  1 Nut 2    3    4    5    6   7

5
4
3
2
1
Stab
6

36  1 Nut 2    3    4    5    6   7

48

44

## Fig.16

39

1    2    3    4    5    6

40

Fa. ELEKTRA-FAURNDAU .....

Reg-Nr. 126 801